# EUROPEAN PATENT SPECIFICATION

(11) **EP 1 704 716 B1**
(45) Date of publication and mention of the grant of the patent: **05.10.2011**
(21) Application number: 04793478.1
(22) Date of filing: 13.10.2004
(51) Int. Cl.: G11B 7/007

(54) **RECORDING MEDIUM HAVING A DATA STRUCTURE FOR MANAGING REPRODUCING OF DATA STREAMS RECORED THEREON AND RECORDING AND REPRODUCING METHODS AND APPARATUSES**
AUFZEICHNUNGSMEDIUM MIT EINER DATENSTRUKTUR ZUR VERWALTUNG DER WIEDERGABE VON DARAUF AUFGEZEICHNETEN DATENSTRÖMEN UND AUFZEICHNUNGS- UND WIEDERGABEVERFAHREN UND -VORRICHTUNGEN
SUPPORT D'ENREGISTREMENT COMPORTANT UNE STRUCTURE DE DONNEES GERANT LA REPRODUCTION DES FLUX DE DONNEES Y ETANT ENREGISTRES, ET PROCEDES ET APPAREILS D'ENREGISTREMENT ET DE REPRODUCTION

(30) Priority: 13.01.2004 KR 2004002391
(43) Date of publication of application: 27.09.2006
(60) Divisional application: 07112185.9
(73) Proprietor: LG Electronics Inc., Youngdungpo-gu, Seoul 150-721 (KR)
(72) Inventor: KIM, Byung Jin, 111-204, Chonggu APT., Seongnam-si, Gyeonggi-do 463-914 (KR); YOO, Jea Yong, 205-808, Ssangyong APT., Seoul 138-747 (KR); SEO, Kang Soo, 104-1504, Chowon APT., Anyang-si, Gyeonggi-do 431-070 (KR)
(74) Representative: Vossius & Partner
(86) International application number: PCT/KR2004/002616
(87) International publication number: WO 2005/067399

(56) References cited:
- WO-A1-2004/001750
- US-A1- 2003 235 402
- US-A1- 2003 235 404

## Description

### Technical Field

The present invention relates to high density recording media such as read-only blu-ray discs (BD-ROM) and methods and apparatuses associated therewith.

### Background Art

Optical discs are widely used as an optical recording medium. Presently, of the optical discs, a new high density optical recording medium (HD-DVD), such as the Blu-ray Disc (hereafter called as "BD"), is under development, for writing and storing high definition video and audio data.

Currently, global standard technical specifications of the Blu-ray Disc (BD), a next generation HD-DVD technology, are under development. BDs are viewed as a next generation optical recording solution that can store significantly larger amounts of data than present DVDs.

In relation to this, optical reproducing apparatuses for Blu-ray Disc (BD) standards are under development. However, because the Blu-ray Disc (BD) standards are not complete yet, there has been difficulty in developing a complete optical reproducing apparatus.

In a BD, main data such as AV data, and various kinds of associated supplemental data for convenience of a user, such as subtitle information are provided. Furthermore, the BD provides management information for reproducing the main data and the supplementary data from the optical disc.

However, in the present Blu-ray Disc (BD) standards, because consolidated standards of the supplementary data, particularly the subtitle information are not complete yet, there are many restrictions on the development of a Blu-ray Disc (BD) optical reproducing apparatus, which causes problems in reproducing supplemental data such as subtitle data and providing it to the user.

US-A-5,881,203 describes a data recording method in which video data and plural channels of language data are divided into packets as units, and video data and plural channels of language data are recorded on a record medium along with the control information containing a flag designating a reproducing channel of the language data matched to a reproducing pattern of the video data.

EP-A-0 676 755 describes a recording medium reproduction apparatus and recording medium reproduction method for selecting, mixing and outputting arbitrary two streams from medium including a plurality of high efficiency-encoded sound streams recorded thereon.

US-A-2002/0191963 describes a recording medium comprising a management area formed in part of an area, and a data area formed in another area, wherein data is divided into a plurality of program chains and recorded in the data area in a hierarchical structure in which each of the program chains is constructed by a plurality of programs.

WO-A-2004/001.748, which is used for the two part form delimitation of the independent claims, describes a recording medium data structure according to the evoluing BD-standard, comprising stream info files clip info files and playlist info files. Sub-playitems are implicitely present because of the MPEG-2 formatted A/V stream.

### Disclosure of Invention

A recording medium according to the present invention is defined according to claim 1 and includes a data structure for managing reproduction of data streams recorded thereon.

In one embodiment, the recording medium stores a playlist that includes a streams table, a playitem and a sub-playitem. The playitem includes information for managing reproduction of a main data stream of data packets, and the sub-playitem includes information for managing reproduction of at least one supplemental data stream of data packets. The streams table provides a list of packet identifiers in the data packets of the main and supplemental data streams.

In one embodiment, the streams table may also provide stream attributes for each main and supplemental data stream for which the streams table lists a packet identifier.

In a further embodiment, the recording medium stores a streams table defining a list of a main data stream and at least one supplemental data stream for selection by a reproducing apparatus during presentation of a playitem and sub-playitem. The playitem provides information for reproducing the main data stream and the sub-playitem provides information for reproducing the supplemental data stream.

In one embodiment, the streams table, for each main and supplemental data stream, provides a packet identifier of the packets forming the data stream.

In a yet another embodiment, the streams table, for each main and supplemental data stream, provides stream attributes.

The present invention further provides apparatuses and methods for recording and reproducing the data structure according to the present invention.

### Brief Description of the Drawings

The accompanying drawings, which are included to provide a further understanding of the invention and are incorporated in and constitute a part of this application, illustrate embodiment(s) of the invention and together with the description serve to explain the principle of the invention.

In the drawings;
FIG. 1 illustrates a file structure for managing data on a disc in accordance with an exemplary embodiment of the present invention;
FIG. 2 schematically illustrates a disc volume for storing the file structure of FIG. 1 in accordance with an embodiment of the present invention;
FIGS. 3A and 3B illustrate diagrams each showing an exemplary case when subtitle data (as an example of supplemental data) and main data are provided to a screen at the same time;
FIGS. 4A and 4B illustrate first embodiments of the data structure for managing reproduction of the data streams recorded on the recording medium;
FIGS. SA and 5B illustrate second embodiments of the data structure for managing reproduction of the data streams recorded on the recording medium;
FIGS. 6A and 6B illustrate third embodiments of the data structure for managing reproduction of the data streams recorded on the recording medium;
FIG. 7A illustrates the Playable_PID_entries() data structure for a playitem and a sub-playitem according to an embodiment of the present invention in detail;
   FIGS. 7B and 7C illustrate detailed structures of the Playable_PID_entries() and the Virtual_Playable_PID_entries() data structures according to embodiments of the present invention;
FIG. 7D illustrates a SubPlayItem syntax in a playlist file of the present invention; and
FIG. 8 is a detailed block diagram of an optical recording and reproducing apparatus according to the present invention

### Best mode for Carrying Out the Invention

Reference will now be made in detail to the exemplary embodiments of the present invention, examples of which are illustrated in the accompanying drawings. While terms used in the present invention are possibly selected from currently well-known terms, terms are arbitrarily chosen by the applicant in some cases and their meanings are explained in detail in the following description. Hence, the present invention should be understood with the meanings of the corresponding terms chosen by the applicant instead of the simple names of the terms.

In relation to the above, main data in the present invention means, for example, title information on an optical disc, and may include video and audio data an author provides to a user, in general recorded in MPEG2 format, and may also be called a main AV stream.

Supplementary or supplemental data means data related to the main data provided to a user for convenience of reproduction such as subtitle information, menu information, audio information for browsable slide show, etc. The supplemental information may be recorded in the MPEG2 format and multiplexed in a main AV stream, or recorded in the MPEG2 format or another format and stored as a stream file independent from the main AV stream.

In the present invention, the subtitle data means a kind of caption information, displayed on a screen when the user selects the subtitle for reproduction with the main data. Therefore, the subtitle can be written in various formats, such as MPEG2 transport (TS) packets, bit-map form of binary format, text data, etc., and the subtitle recorded as text data is called a text subtitle.

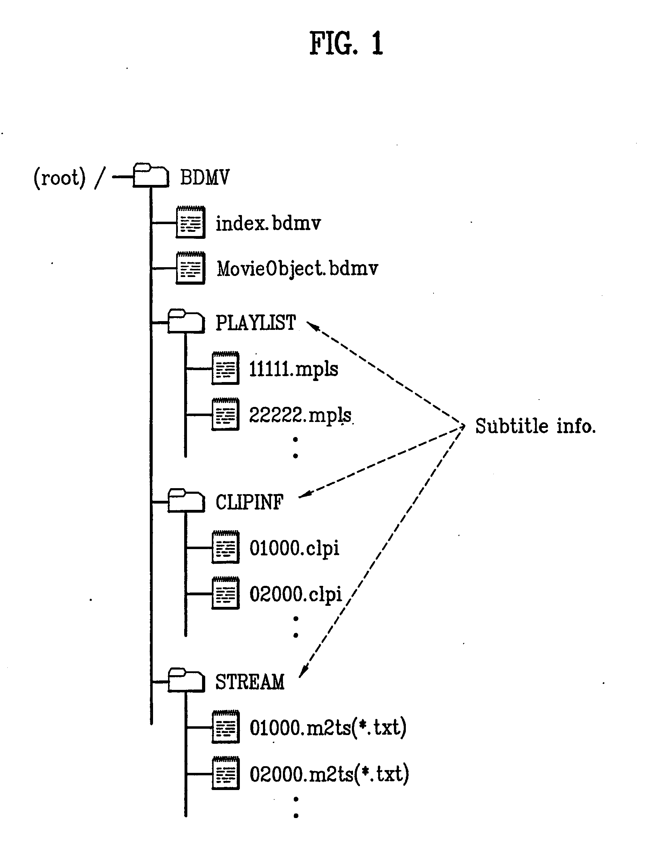

FIG. 1 illustrates a file structure for managing data on a disc in accordance with an exemplary embodiment of the present invention. As shown, at least one BD directory BDMV is included under a root directory. The BD directory includes an index file index.bdmv and an object file MovieObject.bdmv as general files (upper files) for securing a user's interactivity, and includes three directories: a playlist directory PLAYLIST, a clipinfo directory CLIPINF, and a stream directory STREAM

The stream directory STREAM has files on a main video and audio stream (referred to as main AV stream) recorded in particular formats on the disc, and a stream related to a supplementary data, such as a subtitle (called as a subtitle stream). The main AV stream and the supplemental data streams are recorded in MPEG 2 transport packets, and an expansion name of such a file will generally be "*.m2ts". The A/V stream includes source packets of video and audio data. A source packet of video data includes a header and a transport packet. A source packet includes a source packet number, which is generally a sequentially assigned number that serves as an address for accessing the source packet. According to the MPEG 2 standard, the transport packets include a packet identifier (PID). The PID identifies the sequence of transport packets to which a transport packet belongs. Each transport packet in the sequence will have the same PID.

Furthermore, the expansion name for the supplemental data may be different than "*.m2ts". For example, a subtitle stream will be, for example, "*.txt" if the subtitle stream is recorded in a text data format. If the subtitle stream is not recorded in the MPEG2 format, then a file expansion name proper to the format used may provided as the file expansion name. A stream file is sometimes called as a clip stream file in the BD standards, and in the present invention, the subtitle data will exist in a separate file form, e.g., as the subtitle stream file *.txt, separate from the AV stream.

The clipinfo directory CLIPINF has clipinfo files, for example 01000.clpi and 02000.clpi, that have one-to-one correspondence with the respective stream files *.m2ts, and *.txt. Particularly, the clipinfo file *.clpi has attribute information and timing information of a relevant stream file. The timing information includes information on mapping a presentation time stamp (PTS) of data in the stream file to a source packet number of a source packet in the stream file. Typically this map is referred to as an entry point map.

In the BD standard, the AV stream *.m2ts, *.txt files, or etc. and the associated clipinfo file *.clpi are called a "clip", collectively. Accordingly, the file 01000.clpi in the clipinfo directory CLIPINF has attribute information and timing information on the file 01000.m2ts in the stream directory, and the files 01000.clpi and 01000.m2ts form a clip.

The playlist directory PLAYLIST has playlist files *.mpls, each having at least one playitem designating a playing interval of a particular clip. Therefore, the playitem has information on a play starting time In-Time and play end time Out-Time of a particular clip desired to play, i.e., designated by a clip name Clip_Information_File in the playitem. The playlist file *.mpls is basic play file information for playing a desired clip by providing at least one playitem. Moreover, the playlist file *.mpls is provided with a sub-playitem as necessary. The present invention suggests managing the supplementary data inclusive of the subtitle using the sub-playitem, of which detailed description will be given, later.

In the BD directory BDMV, there are an index file index.bdmv and an object file MovieObject.bdmv as general files for securing a user's interactivity. The index file index.bdmv has an index table index Table providing menu information and title information Title the user can select. The MovieObject.bdmv provides navigation commands for, for example, executing a playlist, and may be called from a selection made in the index table.

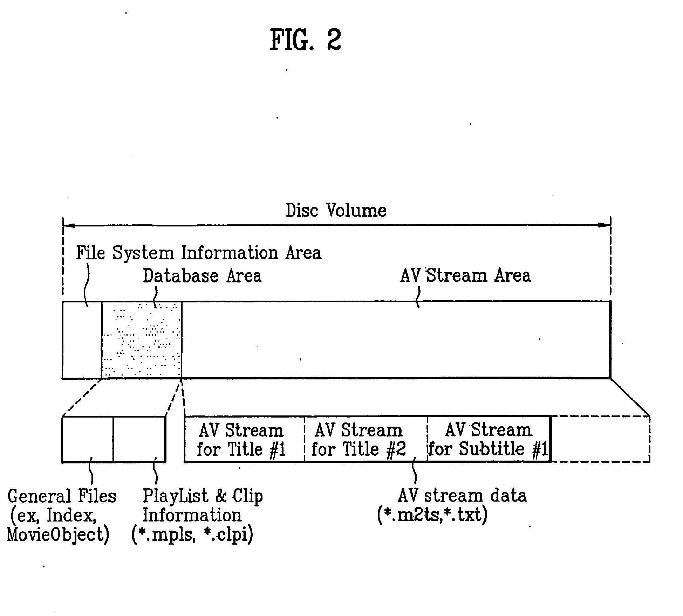

As shown in FIG. 2, the disc volume of a BD-ROM is organized into a file system information area, a database area, and an A/V stream area. The file system information area stores system information for managing the disc. The database area includes a general files area and a playlist and clip information area. The general files area stores general files such as the index.bdmv file and the MovieObject.bdmv file. The playlist and clip information area stores the PLAYLIST directory and the CLIPINF directory. The main data and the supplementary data, such as audio/video/graphic, recorded thereon are stored as the MPEG2 transport stream formatted clip files (*.mats) in the A/V stream area. According to this, the reproducing apparatus determines the main data, and the supplementary data desired to reproduce, and a reproduction type, by using file information in the data base area Database Area.

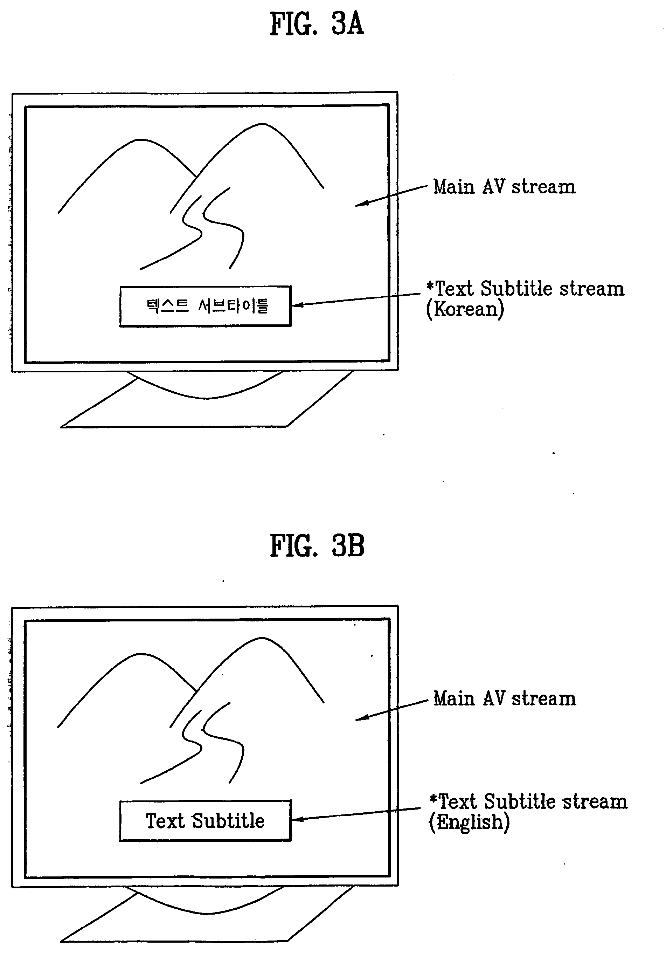

FIGS. 3A and 3B illustrate diagrams each showing an exemplary case when subtitle data (as an example of supplemental data) and main data are provided to a screen at the same time. FIG. 3A illustrates a diagram of a case where the text subtitles is in Korean, and FIG. 3B illustrates a diagram of a case where the text subtitle is in English.

In relation to above, the present invention suggests to provide a plurality of subtitles as a subtitle stream file independent from a main data (main AV stream file). In one case, the plurality of subtitles form independent subtitle stream files respectively, and in another case the plurality of subtitles are united into one subtitle stream file.

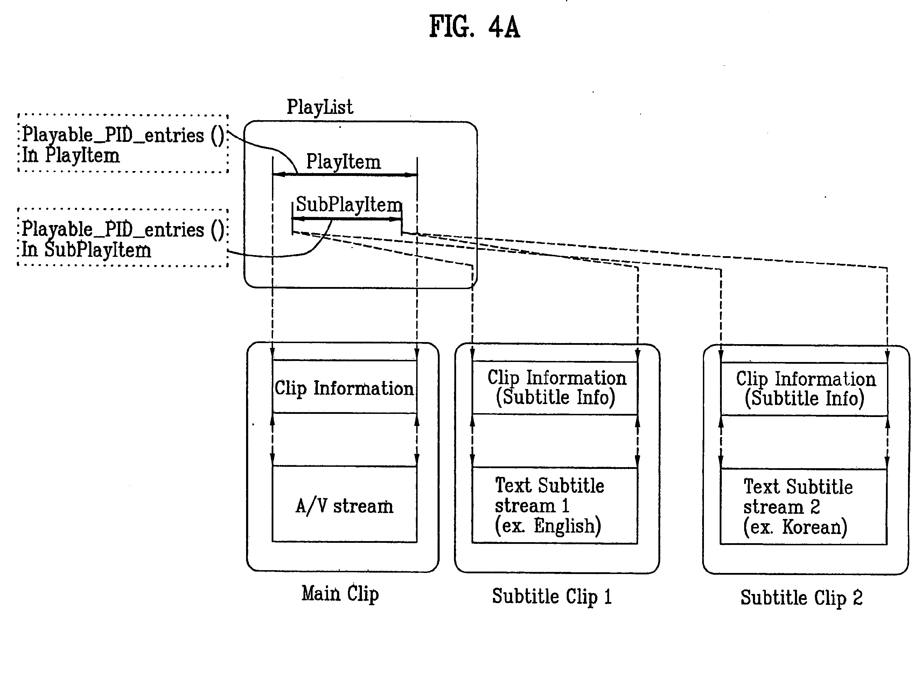

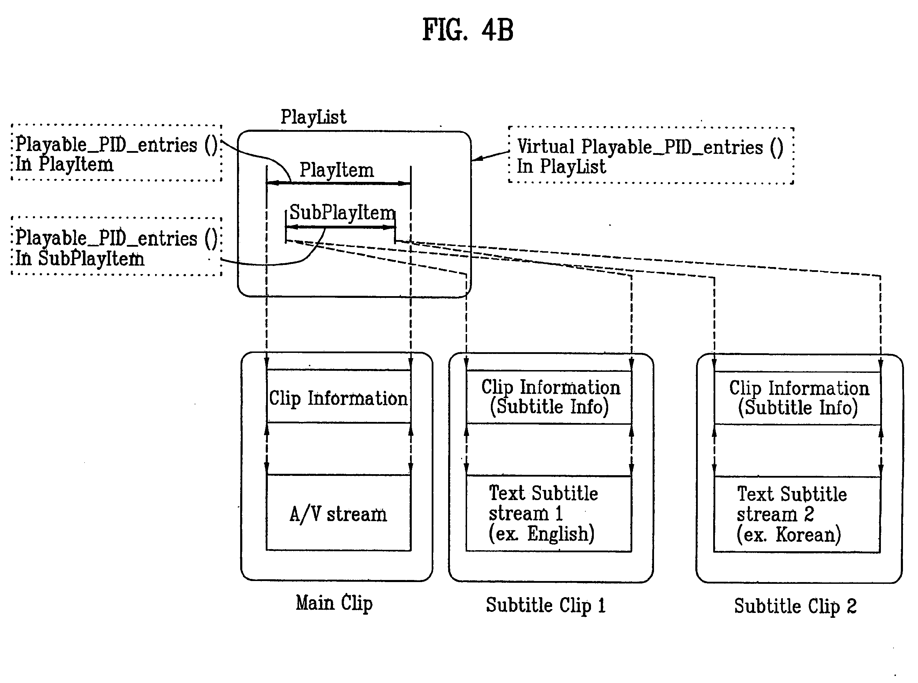

FIGS. 4A and 4B illustrate first embodiments of the data structure for managing reproduction of the data streams recorded on the recording medium. Here, the subtitle data (as an example of supplemental data) linked with main data, includes a plurality of subtitles stored as independent subtitle stream files, and reproduction of the plurality of stream files are managed using one sub-playitem SubPlayItem.

For an example, FIGS. 4A and 4B illustrate a playitem PlayItem in the playlist PlayList includes reproduction managing information for reproducing the main data, and the sub-playitem SubPlayItem includes reproduction managing information for reproducing the subtitle data. More specifically, subtitle stream files Subtitle Clip 1 and 2 for two subtitles in the languages of Korean and English, respectively are reproduced linked with one sub-playitem SubPlayItem in the playlist PlayList.

As further shown, there is a Playable_PID_entries() data structure for providing reproducible main data and subtitle information to the user as reproduction managing information in the playitem PlayItem for the main data, and in the sub-play item SubPlayItem for the subtitle data. FIG. 4B further illustrates that the playlist PlayList may include the data structure Virtual_Playable_PID_entries() for managing reproduction of both the main and subtitle data.

Particularly, in the case of FIG. 4B, all cases are possible, in which the Playable_PID_entries() is provided to the playitem PlayItem and the sub-playitem SubPlayItem and the Virtual_Playable_PID_entries() is provided to the common information area in the playlist PlayList, or the Playable_PID_entries() is provided to the playitem PlayItem only for the main data, and the Virtual_Playable_PID_entries() including subtitle reproduction managing information in the common information area is provided in the playlist PlayList.

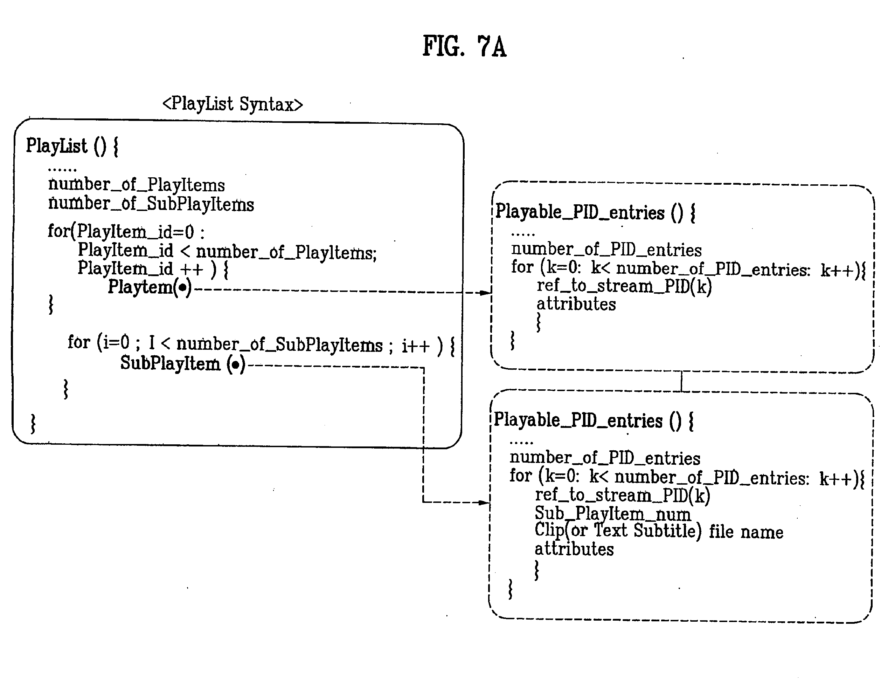

In relation to above, details of the data structures PIayable_PID_entries() and the Virtual_Playable_PID_entries() will be described in detail below with respect to FIGS. 7A-7D.

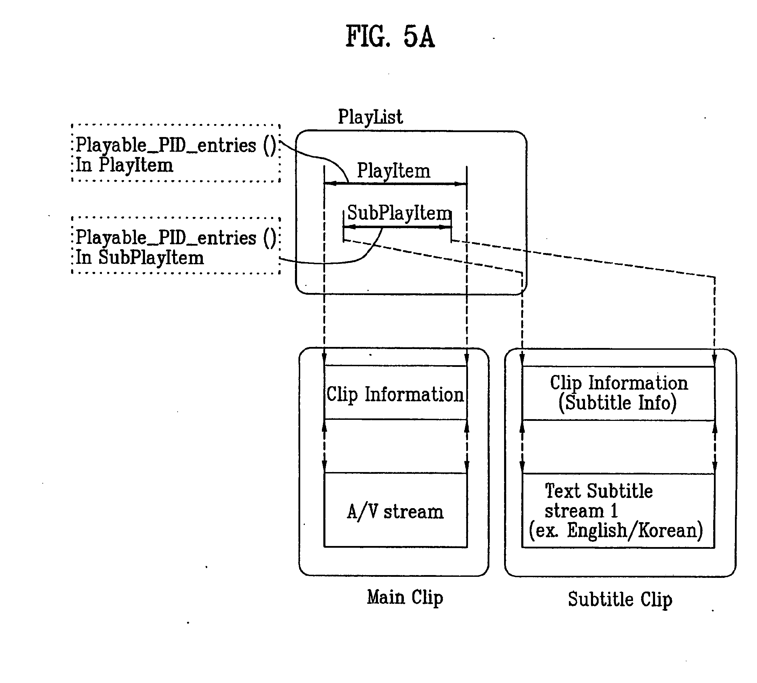

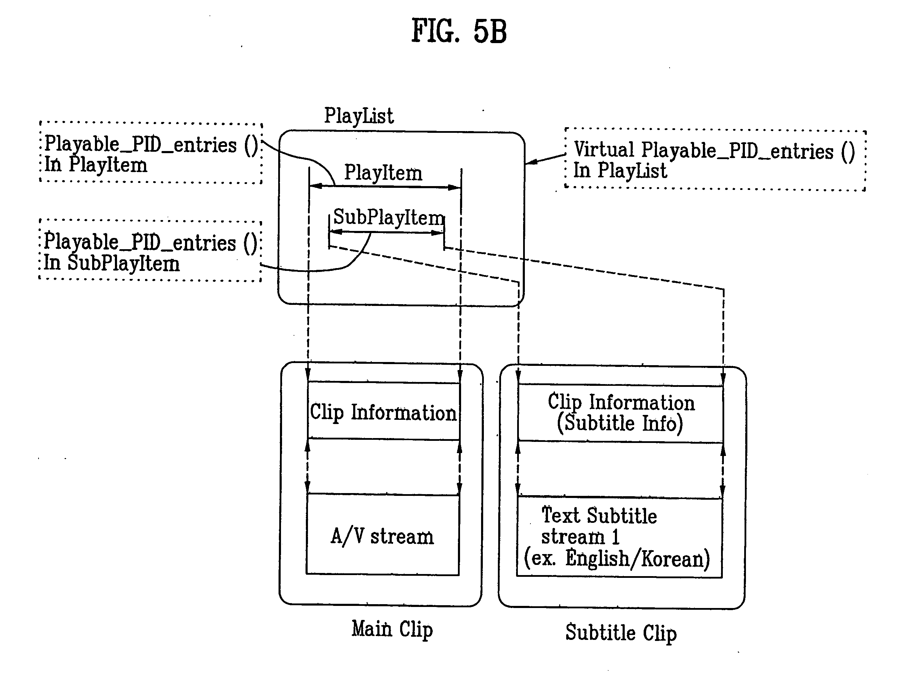

FIGS. 5A and 5B illustrate second embodiments of the data structure for managing reproduction of the data streams recorded on the recording medium. Here, the subtitle (as an example of supplemental data) linked with the main data and forming a plurality of subtitles is stored as one subtitle stream file, and reproduction of the subtitle stream file is managed using one sub-playitem SubPlayItem.

For example, in a case where two subtitles are united to form one subtitle stream file Subtitle Clip, and one subtitle file supports two language subtitles, the united subtitle stream file Subtitle Clip is reproduced linked with the sub-playitem SubPlayItem in the playlist PlayList. Reproduction managing information for managing this is recorded in the sub-playitem SubPlayItem, or playlist PlayList.

According to this, the playitem PlayItem in the playlist PlayList includes reproduction managing information for reproducing the main data, and the sub-playitem SubPlayItem includes reproduction managing information for reproducing the subtitle. Also, the Playable_PID_entries() data structure is provided in the playitem PlayItem in relation to the main data and in the sub-playitem SubPlayItem in relation to the subtitle as shown in FIG. 5A, and/or the Virtual_Playable_ID_entries() data structure, which assists in managing reproduction of the main data and the subtitle data, is provided in the playlist PlayList as shown in FIG. 5B.

Particularly, like FIG. 4B, in the case of FIG. 5B, all cases are possible, in which the Playable_PID_entries() is provided to the playitem PlayItem and the sub-playitem SubPlayItem and the Virtual_Playable_PID_entries() is provided to the common information area in the playlist PlayList, or the Playable_PID_entries() is provided to the playitem PlayItem only for the main data and the Virtual_Playable_PID_entries() including subtitle reproduction managing information is provided in the common information area of the playlist PlayList.

In relation to above, details of the data structures Playable_PID_entries() and the Virtual_Playable_PID_entries() will be described in detail below with respect to FIGS. 7A-7D.

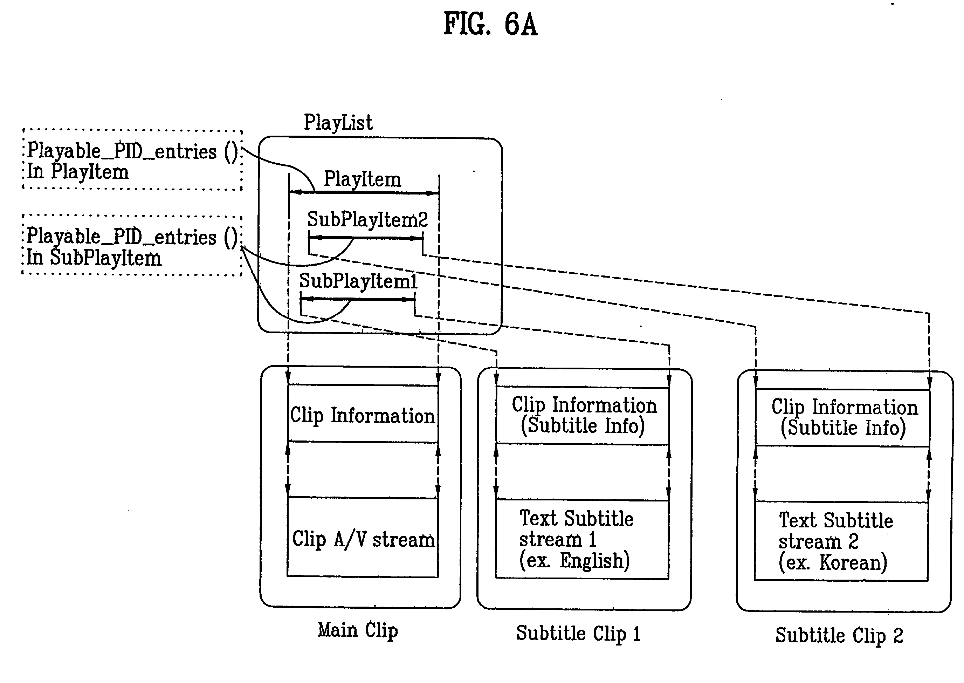

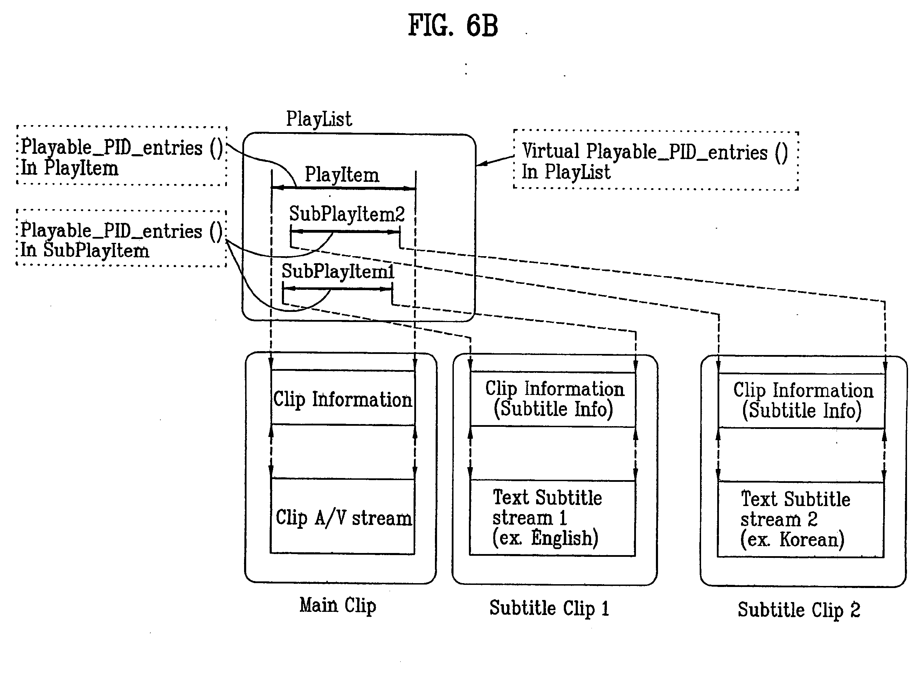

FIGS. 6A and 6B illustrate third embodiments of the data structure for managing reproduction of the data streams recorded on the recording medium. Here, the subtitle data (as an example of supplemental data) linked with a main data for a plurality of subtitles is stored as independent subtitle stream files respectively, and reproduction of the subtitle stream files is managed using corresponding sub-playitems.

For example, FIGS. 6A and 6B illustrate a playitem PlayItem in the playlist PlayList includes reproduction managing information for reproducing the main data, and the sub-playitems SubPlayItem 1 and SubPlayItem 2 include reproduction managing information for reproducing the subtitle stream files Subtitle Clip 1 and 2, respectively, for two subtitles in the languages of Korean and English, respectively.

As further shown, there is a Playable_PID_entries() data structure for providing reproducible main data and subtitle information to the user as reproduction managing information in the playitem PlayItem for the main data, and in the sub-play items SubPlayItem1 and SubPlayItem 2 for the respective subtitle data. FIG. 6B further illustrates that the playlist PlayList may include the data structure Virtual_Playable_PID_entries() for managing reproduction of both the main and subtitle data.

Particularly, in the case of FIG. 6B, all cases are possible, in which the Playable_PID_entries() is provided to the playitem PlayItem and the sub-playitems SubPlayItem1 and SubPlayItem2 and the Virtual_Playable_PID_entries() is provided to the common information area in the playlist PlayList, or the Playable_PID_entries() is provided to the playitem PlayItem only for the main data and the Virtual_Playable_PID_entries() including subtitle reproduction managing information in the common information area is provided in the playlist PlayList.

In relation to above, details of the data structures Playable_PID_entries() and the Virtual_Playable_PID_entries() will be described in detail below with respect to FIGS. 7A-7D.

Principal characteristics of the present invention notable in the first to third embodiments can be summarized as follows.

First, the definition that the main data and the subtitle (supplementary data) form separate individual files permits, not only a case when the supplementary data, such as the subtitle, can be recorded on the optical disc, but also to utilize an external file of the optical disc by means of download, and the like in the future.

Second, though the main data and the subtitle (supplementary data) related to each other are managed under the same file information, for an example, the playlist PlayList file, taking a variety of the subtitle (supplementary data) into account, the main data and the subtitle data are separated into a playitem PlayItem and sub-playitem SubPlayItem in recording the reproduction managing information. Therefor, even in a case where the supplementary data related to the main data exists in a variety of forms other than the subtitle, expansive application of this supplemental data becomes easy according to the present invention.

The introduction of the reproduction managing information independent from the main data, such as Playable_PID_entries() and Virtual_Playable_PID_entries(), into the management information for the subtitle (supplementary data) permits more effective reproduction management of the subtitle.

In relation to above, the Playable_PID_entries() and Virtual_Playable_PID_entries() data structures mentioned in the first to third embodiments as reproduction managing information will be described in detail below.

FIG. 7A illustrates the Playable_PID_entries() data structure for a playitem and a sub-playitem in detail. As shown, the Playable_PID_entries() data structure for both the playitem and the sub-playitem includes a number_of_PID_entries field indicating the number of PID entries in the data structure. For each of the number of PID entries, both data structures provide a ref_to_stream_PID(k) field and an attributes field. The ref_to_stream_PID(k) field provides the PID of the data packets for the data stream. For example, when in the playitem PlayItem, the PID of the main AV stream is provided. When in the sub-playitem Sub-PlayItem, the PID is the PID of a supplemental data stream.

Accordingly, since all the main AV streams managed by playitems are recorded on the MPEG2 TS format, the reproduction management can be made adequately with the ref_to_stream_PID(k) field within the Playable_PID_entries() included in the playitem information PlayItem().

However, as described before, the supplemental data, such as certain types of subtitle data, may not be recorded in the MPEG2 TS format. As a result, there is no "PID" in the subtitle data, and reproduction of the subtitle with the ref_to_stream_PID(k) field is not possible. Accordingly, as shown in FIG. 7A, the Playable_PID_entries() data structure for the sub-playitem Sub-PlayItem may include a sub-playitem number Sub_PlayItem_num or a relevant clip file name Clip_file_name, or Text_subtitle_flle_name field, etc. to identify the appropriate clip file for reproduction of supplemental data.

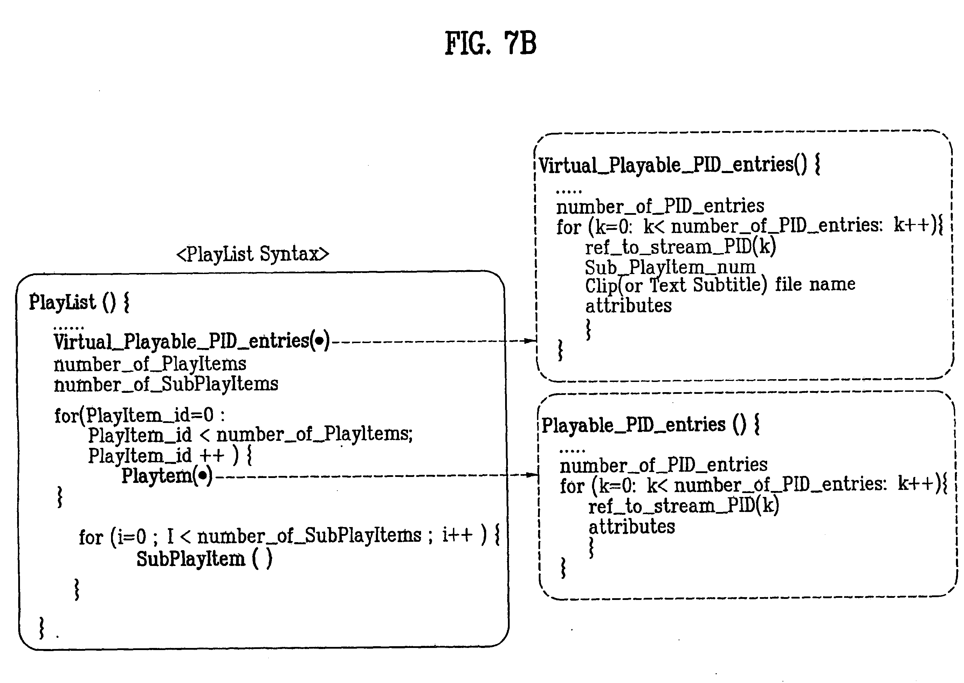

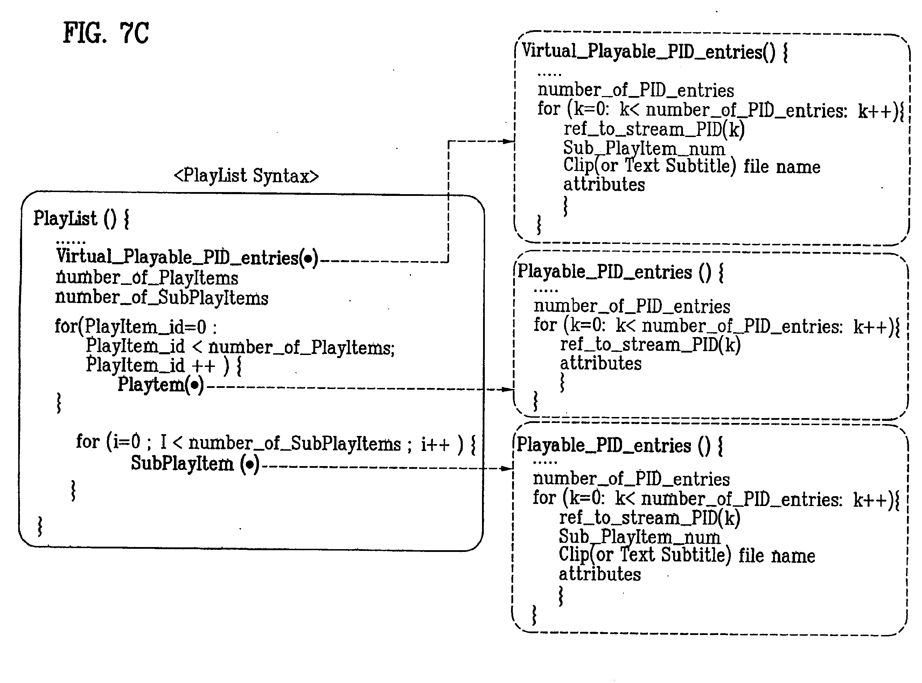

FIGS. 7B and 7C illustrate detailed structures of the PIayable_PID_entries() and the Virtual_Playable_PID_entries() data structures. FIG. 7B illustrates an embodiment where the Playable_PID_entries() data structure is provided for the playitem PlayItem of a playlist PlayList, but not for a sub-playitem SubPlayItem. Here, the Playable_PID_entries() data structure for the playitem PlayItem is the same as discussed above with respect to FIG. 7A. FIG. 7C illustrates an embodiment where the Playable_PID_entries() data structure is provided for both the playitem PlayItem and the sub-playitem SubPlayItem. Here, the Playable_PID_entries() data structures for the playitem PlayItem and the sub-playitem SubPlayItem are the same as discussed above with respect to FIG. 7A.

FIGS. 7B and 7C also illustrates the Virtual_Playable_PID_entries() data structure. This data structure has the same fields as described above with respect to the Playable_PID_entries() data structures for the sub-playitem SubPlayItem. However, the Virtual_Playable_PID_entries() data structure provides the PIDs for the supplemental data streams and the main data stream. Namely, the Virtual_Playable_PID_entries() data structure provides the same information as the Playable_PID_entries() data structure for both the playitem PlayItem and the sub-playitem SubPlayItem. As such, the Virtual_Playable_PID_entries() data structure defines a list of the main data stream and each supplemental data stream for selection by a reproducing apparatus during presentation of the playitem PlayItem and the sub-playitem SubPlayItem.

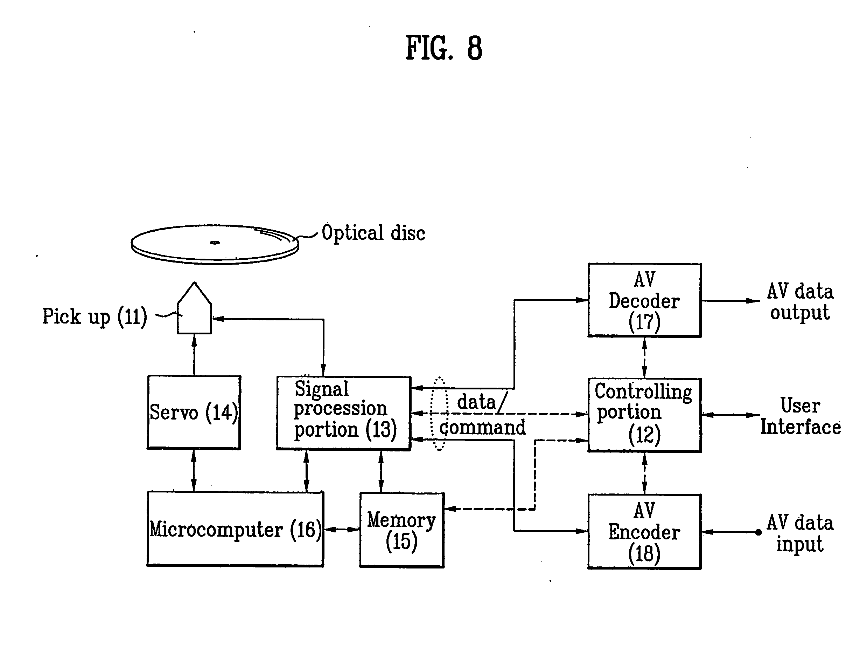

According to this, the optical recording reproduction apparatus (FIG. 8) can reproduce the data streams more efficiently because the playlist file may provide the reproduction managing information Virtual_Playable_ PID_entries() for the main and supplemental data streams. Furthermore, if the Playable_PID_entries() data structures are provided in the playitem information PlayItem() or the sub-playitem information SubPlayItem(), reliability of this reproduction managing information will be enhanced.

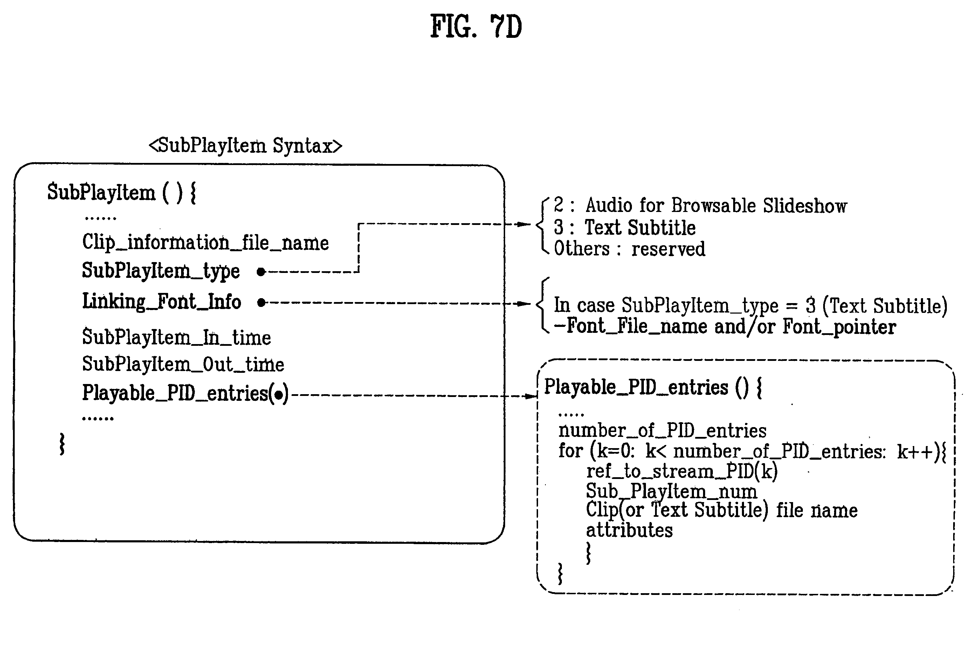

FIG. 7D illustrates a sub-playitem syntax in greater detail. As shown, the sub-playitem information SubPlayItem() has a field for designating the name of the clip information file Clip_information_file_name associated with the stream file to be reproduced, and provides a starting time SubPlayItem_In_time and an end time SubPlayItem_Out_time for reproducing the stream file indicated by the named clip information file. The sub-playitem also includes SubPlayItem_type field for designating a kind of supplemental stream file managed by the sub-playitem. For example, if the supplemental data stream is an audio stream for browsable slide show this field is set to "2". Or if the supplemental data stream is a text subtitle, the type field is set to "3". Therefore, it is apparent that various kinds of supplementary data may be expanded on as the standardization process progresses.

If the stream file managed by the sub-playitem is a subtitle ("SubPlayItem_type = 3"), then the sub-playitem may further include a Linking_Font_Info field. The Linking_Font_Info information, related to the font of the subtitle, provides a Font_File_name, if the font files of possible fonts exist individually, or with a Font_pointer field that indicates a position of a font proper to the subtitle in a font file, if there is only one font file.

FIG. 8 is a detailed block diagram of an optical recording and reproducing apparatus according to the present invention. As shown, the apparatus includes a pickup unit 11 reading out management information and data recorded in an optical disk, a servo 14 controlling the operation of the pickup unit 11, a signal processing unit 13 restoring a playback signal received from the pickup unit 11 into a wanted signal value or modulating a signal to be recorded in the optical disk, a memory 15 temporarily storing the management information such as the sound information and sound data as discussed above, and a microcomputer 16 controlling the operation of the servo 14, the signal processing unit 13 and the memory 15. The above discussed elements of the optical recording and reproducing apparatus may be called a recording and reproducing portion.

In relation to above, in the present invention, the memory 15 represents various storage means (RAM, buffer, and the like) that may exist in the optical recording and reproduction apparatus, and it is apparent that the memory 15 may be replaced with a plurality of different storage means.

An AV decoder 17 decodes output data according to the control of the control unit 12 to provide the decoded data to a user. In order to perform a function of recording a signal in the optical disk, an AV encoder 18 converts an input signal to a specifically formatted signal such as an MPEG2 transport stream according to the control of the control unit 12, and provides the converted signal to the signal processing unit 13 of the record playback system 20.

The control unit 12, which is an element for controlling operations of the apparatus such as discussed in detail above, controls the record playback system 20 (and more specifically, the elements therein). For example the control unit 12 controls the read out of the sub-playitem information that manages the subtitle in response to a user's order for reproducing a particular subtitle, and reproduces the subtitle According to the subtitle reproduction management information included in the read sub-playitem information. More specifically, the control unit 12 determines if the subtitle is reproducible by using the subtitle reproduction managing information Playable_PID_entries() or Virtual_ Playable_PID_entries() stored on the memory temporarily, reads font of the subtitle if the subtitle is reproducible, and controls reproduction of the subtitle.

While the invention has been disclosed with respect to a limited number of embodiments, those skilled in the art, having the benefit of this disclosure, will appreciate numerous modifications and variations there from. For example, while described with respect to a Blu-ray ROM optical disk in several instances, the present invention is not limited to this standard of optical disk or to optical disks.

### Industrial applicability

The present invention includes a data structure for managing reproduction of data streams recorded thereon. In one embodiment, the recording medium stores a playlist that includes a streams table, a playitem and a sub-playitem. The playitem includes information for managing reproduction of a main data stream of data packets, and the sub-playitem includes information for managing reproduction of at least one supplemental data stream of data packets. The streams table provides a list of packet identifiers in the data packets of the main and supplemental data streams.

It will be apparent to those skilled in the art that various modifications and variations can be made in the present invention. Thus, it is intended that the present invention covers the modifications and variations of this invention provided they come within the scope of the appended claims.

## Claims

1. A recording medium comprising:
a stream directory storing a main data stream and a supplemental data stream, each data stream including data packets, each data packets having a packet number and a packet identifier(PID);
a clip information directory storing first clip information including a first map information mapping presentation time stamps to the packet numbers of the main data stream and second clip information including a second map information mapping presentation time stamps to the packet numbers of the supplemental data stream;
a playlist directory storing a playlist including a playitem for managing the main data stream and a sub-playitem for managing the supplemental data stream, the playitem including presentation start and end times information in the main data stream, the sub-playitem including presentation start and end times information in the supplemental data stream, the start and end times information of the playitem and the sub-playitem indicating the presentation time stamps in the first and second clip information respectively,
the recording medium **characterized in that** the playlist further includes a stream table including playable stream entries for the main and supplemental data streams, each playable stream entry indicating a packet identifier(PID) of a data stream which is reproducible during presentation of the playitem or the sub-playitem.

2. The recording medium of claim 1, wherein the playlist further includes another sub-playitem including information for managing another supplemental data stream, and the stream table provides an identifier of the another supplemental data stream.

3. The recording medium of claim 1, wherein the stream table provides stream attributes for each main and supplemental data stream.

4. The recording medium of claim 1, wherein the main data stream is at least a video data stream and the supplemental data stream is a subtitle data stream.

5. A method of reproducing data streams from a recording medium, the method comprising:
reading a playlist recorded on the recording medium, the playlist including a playitem for managing a main data stream and a sub-playitem for managing a supplemental data stream, the playitem including presentation start and end times information in the main data stream, the sub-playitem including presentation start and end times information in the supplemental data stream, the start and end times information of the playitem and the sub-playitem indicating presentation time stamps,
reading first clip information including first map information mapping the presentation time stamps to packet numbers of the main data stream and second map information mapping the presentation time stamps to packet numbers of the supplemental data stream; and
reproducing the main data stream and the supplemental data stream, each data stream including data packets having the packet numbers and a packet identifier(PID),
the method **characterized in that** the playlist further includes a stream table including playable stream entries for the main and supplemental data streams, each playable stream entry indicating a packet identifier(PID) of a data stream which is reproducible during presentation of the playitem or sub-playitem.

6. The method of claim 5, further comprising:
reading stream attributes information for each main and supplemental data stream from the stream table.

7. A method of recording data streams on a recording medium, the method comprising: ,
recording a main data stream and a supplemental data stream on the recording medium, each data stream including data packets, each data packets having a packet number and a packet identifier(PID);
recording, on the recording medium, first clip information including first map information mapping presentation time stamps to the packet numbers of the main data stream and second clip information including second map information mapping presentation time stamps to the packet numbers of the supplemental data stream; and
recording a playlist on the recording medium the playlist including a playitem for managing the main data stream and a sub-playitem for managing the supplemental data stream, the playitem including presentation start and end times information in the main data stream, the sub-playitem including presentation start and end times information in the supplemental data stream, the start and end times information of the playitem and the sub-playitem indicating the presentation time stamps in first and second clip information respectively,
the method **characterized in that** the playlist further includes a stream table including playable stream entries for the main and supplemental data streams, each playable stream entry indicating a packet identifier(PID) of a data stream which is reproducible during presentation of the playitem or the sub-playitem.

8. The method of claim 7, wherein the stream table further includes stream attributes information for each main and supplemental data stream.

9. An apparatus for reproducing data streams from a recording medium, the apparatus comprising:
a pickup configured to reproduce data recorded on the recording medium; and
a controller configured to control the pickup to
read a playlist recorded on the recording medium, the playlist including a playitem for managing a main data stream and a sub-playitem for managing a supplemental data stream, the playitem including presentation start and end times information in the main data stream, the sub-playitem including presentation start and end times information in the supplemental data stream, the start and end times information of the playitem and the sub-playitem indicating presentation time stamps,
read, from the recording medium, first clip information including first map information mapping the presentation time stamps to packet numbers of the main data stream and second clip information including second map information mapping the presentation time stamps to packet numbers of the supplementary data stream, and
reproduce the main data stream and the supplemental data stream, each data stream including data packets, each data packets having the packet numbers and a packet identifier (PID),
the apparatus **characterized in that** the controller is configured to control the pickup to read a stream table from the playlist, the stream table including playable stream entries for the main and supplemental data streams, each playable stream entry indicating a packet identifier(PID) of a data stream which is reproducible during presentation of the playitem or the sub-playitem.

10. The apparatus of claim 9, wherein the controller is configured to read stream attributes information for each main and supplemental data stream from the stream table.

11. An apparatus for recording data streams on a recording medium, the apparatus comprising:
a pickup configured to record data on the recording medium; and
a controller, operably coupled to the pickup, configured to control the pickup to
record a main data stream and a supplemental data stream on the recording medium, each data stream including data packets, each data packets having a packet number and a packet identifier(PID),
record, on the recording medium, first clip information including a first map information mapping presentation time stamps to the packet numbers of the main data stream and second clip information including a second map information mapping presentation time stamps to the packet numbers of the supplemental data stream,
record a playlist on the recording medium, the playlist including a playitem for managing the main data stream and a sub-playitem for managing the supplemental data stream, the playitem including presentation start and end times information in the main data stream, the sub-playitem including presentation start and end times information in the supplemental data stream, the start and end times information of the playitem and the sub-playitem indicating the presentation time stamps in the first and second clip information respectively,
the apparatus **characterized in that** the playlist further includes a stream table including playable stream entries for the main and supplemental data streams, each playable stream entry indicating a packet identifier(PID) of a data stream during presentation of the playitem or the sub-playitem.

12. The apparatus of claim 11, wherein the stream table further includes stream attributes information for each main and supplemental data stream.

## Patentansprüche

1. Aufzeichnungsmedium, das aufweist:
ein Stromverzeichnis, das einen Hauptdatenstrom und einen Zusatzdatenstrom speichert, wobei jeder Datenstrom Datenpakete aufweist, wobei jedes Datenpaket eine Paketnummer und eine Paketkennung (PID) aufweist;
ein Clipinformationsverzeichnis, das eine erste Clipinformation, die eine erste Speicherabbildinformation aufweist, die Präsentationszeitmarken auf die Paketnummern des Hauptdatenstroms abbildet, und eine zweite Clipinformation speichert, die eine zweite Speicherabbildinformation aufweist, die Präsentationszeitmarken auf die Paketnummern des Zusatzdatenstroms abbildet;
ein Wiedergabelistenverzeichnis, das eine Wiedergabeliste speichert, die einen Wiedergabe-Eintrag zur Verwaltung des Hauptdatenstroms und einen Wiedergabe-Untereintrag zur Verwaltung des Zusatzdatenstroms aufweist, wobei der Wiedergabe-Eintrag Informationen zu Präsentationsstart- und -endzeitpunkten im Hauptdatenstrom aufweist und der Wiedergabe-Untereintrag Informationen zu Präsentationsstart- und -endzeitpunkten im Zusatzdatenstrom aufweist, wobei die Informationen zu Start- und Endzeitpunkten des Wiedergabe-Eintrags bzw. des Wiedergabe-Untereintrags die Präsentationszeitmarken in der ersten bzw. zweiten Clipinformation anzeigen,
wobei das Aufzeichnungsmedium **dadurch gekennzeichnet ist, dass** die Wiedergabeliste ferner eine Stromtabelle aufweist, die abspielbare Stromeinträge für die Haupt- und Zusatzdatenströme aufweist, wobei jeder abspielbare Stromeintrag eine Paketkennung (PID) eines Datenstroms anzeigt, der während der Präsentation des Wiedergabe-Eintrags oder des Wiedergabe-Untereintrags reproduzierbar ist.

2. Aufzeichnungsmedium nach Anspruch 1, wobei die Wiedergabeliste ferner einen weiteren Wiedergabe-Untereintrag aufweist, der eine Information zur Verwaltung eines weiteres Zusatzdatenstroms aufweist, und wobei die Stromtabelle eine Kennung des weiteren Zusatzdatenstroms bereitstellt.

3. Aufzeichnungsmedium nach Anspruch 1, wobei die Stromtabelle Stromattribute für jeden Haupt- und Zusatzdatenstrom bereitstellt.

4. Aufzeichnungsmedium nach Anspruch 1, wobei der Hauptdatenstrom zumindest ein Videodatenstrom ist und der Zusatzdatenstrom ein Untertiteldatenstrom ist.

5. Verfahren zur Wiedergabe von Datenströmen von einem Aufzeichnungsmedium, wobei das Verfahren aufweist:
Lesen einer auf dem Aufzeichnungsmedium aufgezeichneten Wiedergabeliste, wobei die Wiedergabeliste einen Wiedergabe-Eintrag zur Verwaltung eines Hauptdatenstroms und einen Wiedergabe-Untereintrag zur Verwaltung eines Zusatzdatenstroms aufweist, wobei der Wiedergabe-Eintrag Informationen zu Präsentationsstart- und -endzeitpunkten im Hauptdatenstrom aufweist und der Wiedergabe-Untereintrag Informationen zu Präsentationsstart- und -endzeitpunkten im Zusatzdatenstrom aufweist, wobei die Informationen zu Start- und Endzeitpunkten des Wiedergabe-Eintrags und des Wiedergabe-Untereintrags Präsentationszeitmarken anzeigen,
Lesen einer ersten Clipinformation, die eine erste Speicherabbildinformation, die Präsentationszeitmarken auf Paketnummern des Hauptdatenstroms abbildet, und eine zweite Speicherabbildinformation aufweist, die Präsentationszeitmarken auf Paketnummern des Zusatzdatenstroms abbildet,
Wiedergabe des Hauptdatenstroms und des Zusatzdatenstroms, wobei jeder Datenstrom Datenpakete mit den Paketnummern und einer Paketkennung (PID) aufweist,
wobei das Verfahren **dadurch gekennzeichnet ist, dass** die Wiedergabeliste ferner eine Stromtabelle aufweist, die abspielbare Stromeinträge für die Haupt- und Zusatzdatenströme aufweist, wobei jeder abspielbare Stromeintrag eine Paketkennung (PID) eines Datenstroms anzeigt, der während der Präsentation des Wiedergabe-Eintrags oder des Wiedergabe-Untereintrags reproduzierbar ist.

6. Verfahren nach Anspruch 5, das ferner aufweist:
Lesen von Stromattribut-Informationen für jeden Haupt- und Zusatzdatenstrom aus der Stromtabelle.

7. Verfahren zur Aufzeichnung von Datenströmen auf ein Aufzeichnungsmedium, wobei das Verfahren aufweist:
Aufzeichnen eines Hauptdatenstroms und eines Zusatzdatenstrom auf das Aufzeichnungsmedium, wobei jeder Datenstrom Datenpakete aufweist, wobei jedes Datenpaket eine Paketnummer und eine Paketkennung (PID) aufweist;
Aufzeichnen einer ersten Clipinformation, die eine erste Speicherabbildinformation aufweist, die Präsentationszeitmarken auf die Paketnummern des Hauptdatenstroms abbildet, und einer zweiten Clipinformation, die eine zweite Speicherabbildinformation aufweist, die Präsentationszeitmarken auf die Paketnummern des Zusatzdatenstroms abbildet, auf das Aufzeichnungsmedium; und
Aufzeichnen einer Wiedergabeliste auf das Aufzeichnungsmedium, wobei die Wiedergabeliste einen Wiedergabe-Eintrag zur Verwaltung des Hauptdatenstroms und einen Wiedergabe-Untereintrag zur Verwaltung des Zusatzdatenstroms aufweist, wobei der Wiedergabe-Eintrag Informationen zu Präsentationsstart- und -endzeitpunkten im Hauptdatenstrom aufweist und der Wiedergabe-Untereintrag Informationen zu Präsentationsstart- und -endzeitpunkten im Zusatzdatenstrom aufweist, wobei die Informationen zu Start- und Endzeitpunkten des Wiedergabe-Eintrags bzw. des Wiedergabe-Untereintrags die Präsentationszeitmarken in der ersten bzw. zweiten Clipinformation anzeigen,
wobei das Verfahren **dadurch gekennzeichnet ist, dass** die Wiedergabeliste ferner eine Stromtabelle aufweist, die abspielbare Stromeinträge für die Haupt- und Zusatzdatenströme aufweist, wobei jeder abspielbare Stromeintrag eine Paketkennung (PID) eines Datenstroms anzeigt, der während der Präsentation des Wiedergabe-Eintrags oder des Wiedergabe-Untereintrags reproduzierbar ist.

8. Verfahren nach Anspruch 7, wobei die Stromtabelle ferner Stromattribut-Informationen für jeden Haupt- und Zusatzdatenstrom aufweist.

9. Vorrichtung zur Wiedergabe von Datenströmen von einem Aufzeichnungsmedium, wobei die Vorrichtung aufweist:
einen Abtaster, der für die Wiedergabe von auf dem Aufzeichnungsmedium aufgezeichneten Daten konfiguriert ist; und
eine Steuereinheit, die für die Steuerung des Abtasters konfiguriert ist, um
eine auf dem Aufzeichnungsmedium aufgezeichnete Wiedergabeliste zu lesen, wobei die Wiedergabeliste einen Wiedergabe-Eintrag zur Verwaltung eines Hauptdatenstroms und einen Wiedergabe-Untereintrag zur Verwaltung eines Zusatzdatenstroms aufweist, wobei der Wiedergabe-Eintrag Informationen zu Präsentationsstart- und -endzeitpunkten im Hauptdatenstrom aufweist und der Wiedergabe-Untereintrag Informationen zu Präsentationsstart- und -endzeitpunkten im Zusatzdatenstrom aufweist, wobei die Informationen zu Start- und Endzeitpunkten des Wiedergabe-Eintrags und des Wiedergabe-Untereintrags Präsentationszeitmarken anzeigen,
von dem Aufzeichnungsmedium eine erste Clipinformation, die eine erste Speicherabbildinformation aufweist, die Präsentationszeitmarken auf Paketnummern des Hauptdatenstroms abbildet, und eine zweite Clipinformation zu lesen, die eine zweite Speicherabbildinformation aufweist, die Präsentationszeitmarken auf Paketnummern des Zusatzdatenstroms abbildet, und
den Hauptdatenstrom und den Zusatzdatenstrom wiederzugeben, wobei jeder Datenstrom Datenpakete aufweist, wobei jedes Datenpaket die Paketnummern und eine Paketkennung (PID) aufweist,
wobei die Vorrichtung **dadurch gekennzeichnet ist, dass** die Steuereinheit für die Steuerung des Abtasters konfiguriert ist, um eine Stromtabelle aus der Wiedergabeliste auszulesen, wobei die Stromtabelle abspielbare Stromeinträge für die Haupt- und Zusatzdatenströme aufweist, wobei jeder abspielbare Stromeintrag eine Paketkennung (PID) eines Datenstroms anzeigt, der während der Präsentation des Wiedergabe-Eintrags oder des Wiedergabe-Untereintrags reproduzierbar ist.

10. Vorrichtung nach Anspruch 9, wobei die Steuereinheit so konfiguriert ist, dass sie Stromattribut-Informationen für jeden Haupt- und Zusatzdatenstrom aus der Stromtabelle ausliest.

11. Vorrichtung zur Aufzeichnung von Datenströmen auf ein Aufzeichnungsmedium, wobei die Vorrichtung aufweist:
einen Abtaster, der für die Aufzeichnung von Daten auf das Aufzeichnungsmedium konfiguriert ist; und
eine betriebsfähig an den Abtaster gekoppelte Steuereinheit, die für die Steuerung des Abtasters konfiguriert ist, um
einen Hauptdatenstrom und einen Zusatzdatenstrom auf das Aufzeichnungsmedium aufzuzeichnen, wobei jeder Datenstrom Datenpakete aufweist, wobei jedes Datenpaket eine Paketnummer und eine Paketkennung (PID) aufweist,
auf das Aufzeichnungsmedium eine erste Clipinformation, die eine erste Speicherabbildinformation aufweist, die Präsentationszeitmarken auf die Paketnummern des Hauptdatenstroms abbildet, und eine zweite Clipinformation aufzuzeichnen, die eine zweite Speicherabbildinformation aufweist, die Präsentationszeitmarken auf die Paketnummern des Zusatzdatenstroms abbildet,
auf das Aufzeichnungsmedium eine Wiedergabeliste aufzuzeichnen, wobei die Wiedergabeliste einen Wiedergabe-Eintrag zur Verwaltung des Hauptdatenstroms und einen Wiedergabe-Untereintrag zur Verwaltung des Zusatzdatenstroms aufweist, wobei der Wiedergabe-Eintrag Informationen zu Präsentationsstart- und -endzeitpunkten im Hauptdatenstrom aufweist und der Wiedergabe-Untereintrag Informationen zu Präsentationsstart- und -endzeitpunkten im Zusatzdatenstrom aufweist, wobei die Informationen zu Start- und Endzeitpunkten des Wiedergabe-Eintrags bzw. des Wiedergabe-Untereintrags die Präsentationszeitmarken in der ersten bzw. zweiten Clipinformation anzeigen,
wobei die Vorrichtung **dadurch gekennzeichnet ist, dass** die Wiedergabeliste ferner eine Stromtabelle aufweist, die abspielbare Stromeinträge für die Haupt- und Zusatzdatenströme aufweist, wobei jeder abspielbare Stromeintrag eine Paketkennung (PID) eines Datenstroms anzeigt, der während der Präsentation des Wiedergabe-Eintrags oder des Wiedergabe-Untereintrags reproduzierbar ist.

12. Vorrichtung nach Anspruch 11, wobei die Stromtabelle ferner Stromattribut-Informationen für jeden Haupt- und Zusatzdatenstrom aufweist.

## Revendications

1. Support d'enregistrement comprenant :
un répertoire de flux stockant un flux principal de données et un flux supplémentaire de données, chaque flux de données incluant des paquets de données, chaque paquet de données ayant un numéro de paquet et un identificateur de paquet (PID) ;
un répertoire d'informations de clip stockant une première information de clip incluant une première information de carte mappant des horodatages de présentation sur des numéros de paquet du flux principal de données et une seconde information de clip incluant une seconde information de carte mappant des horodatages de présentation sur des numéros de paquet du flux supplémentaire de données ;
un répertoire de liste de contenus stockant une liste de contenus incluant un élément à reproduire pour gérer le flux principal de données et un sous-élément à reproduire pour gérer le flux supplémentaire de données, l'élément à reproduire incluant des informations d'heures de début et de fin de présentation dans le flux principal de données, le sous-élément à reproduire incluant des informations d'heures de début et
de fin de présentation dans le flux supplémentaire de données, les informations d'heures de début et de fin de l'élément à reproduire et du sous-élément à reproduire indiquant les horodatages de présentation respectivement dans les première et seconde informations de clip,
le support d'enregistrement étant **caractérisé en ce que** la liste de contenus inclut en outre un tableau de flux incluant des entrées de flux reproductibles pour le flux principal de données et pour le flux supplémentaire de données, chaque entrée de flux reproductible indiquant un identificateur de paquet (PID) d'un flux de données qui est reproductible au cours de la présentation de l'élément à reproduire ou du sous-élément à reproduire.

2. Support d'enregistrement selon la revendication 1, dans lequel la liste de contenus inclut en outre un autre sous-élément à reproduire incluant des informations pour gérer un autre flux supplémentaire de données, et le tableau de flux fournit un identificateur de l'autre flux supplémentaire de données.

3. Support d'enregistrement selon la revendication 1, dans lequel le tableau de flux fournit des attributs de flux pour chaque flux principal et supplémentaire de données.

4. Support d'enregistrement selon la revendication 1, dans lequel le flux principal de données est au moins un flux de données vidéo et le flux supplémentaire de données est un flux de données de sous-titres.

5. Procédé de reproduction de flux de données d'un support d'enregistrement, le procédé comprenant les étapes consistant à :
lire une liste de contenus enregistrée sur le support d'enregistrement, la liste de contenus incluant un élément à reproduire pour gérer un flux principal de données et un sous-élément à reproduire pour gérer un flux supplémentaire de données, l'élément à reproduire incluant des informations d'heures de début et de fin de présentation dans le flux principal de données, le sous-élément à reproduire incluant des informations d'heures de début et de fin de présentation dans le flux supplémentaire de données, les informations d'heures de début et de fin de l'élément à reproduire et du sous-élément à reproduire indiquant les horodatages de présentation,
lire une première information de clip incluant une première information de carte mappant les horodatages de présentation sur des numéros de paquet du flux principal de données et une seconde information de clip incluant une seconde information de carte mappant les horodatages de présentation sur des numéros de paquet du flux supplémentaire de données, et
reproduire le flux principal de données et le flux supplémentaire de données, chaque flux de données incluant des paquets de données ayant les numéros de paquet et un identifiant de paquet (PID),
le procédé étant **caractérisé en ce que** la liste de contenus inclut en outre un tableau de flux incluant des entrées de flux reproductibles pour le flux principal de données et pour le flux supplémentaire de données, chaque entrée de flux reproductible indiquant un identificateur de paquet (PID) d'un flux de données qui est reproductible au cours de la présentation de l'élément à reproduire ou du sous-élément à reproduire.

6. Procédé selon la revendication 5, comprenant en outre l'étape consistant à :
lire les informations d'attributs de flux pour chaque flux principal et supplémentaire de données à partir du tableau de flux.

7. Procédé d'enregistrement de flux de données sur un support d'enregistrement, le procédé comprenant les étapes consistant à :
enregistrer un flux principal de données et un flux supplémentaire de données sur le support d'enregistrement, chaque flux de données incluant des paquets de données, chaque paquet de données ayant un numéro de paquet et un identificateur de paquet (PID) ;
enregistrer, sur le support d'enregistrement, une première information de clip incluant une première information de carte mappant des horodatages de présentation sur les numéros de paquet du flux principal de données et une seconde information de clip incluant une seconde information de carte mappant des horodatages de présentation sur des numéros de paquet du flux supplémentaire de données ; et
enregistrer une liste de contenus sur le support d'enregistrement, la liste de contenus incluant un élément à reproduire pour gérer le flux principal de données et un sous-élément à reproduire pour gérer le flux supplémentaire de données, l'élément à reproduire incluant des informations d'heures de début et de fin de présentation dans le flux principal de données, le sous-élément à reproduire incluant des informations d'heures de début et de fin de présentation dans le flux supplémentaire de données,
les informations d'heures de début et de fin de l'élément à reproduire et du sous-élément à reproduire indiquant les horodatages de présentation respectivement dans les première et seconde informations de clip,
le procédé étant **caractérisé en ce que** la liste de contenus inclut en outre un tableau de flux incluant des entrées de flux reproductibles pour le flux principal de données et pour le flux supplémentaire de données, chaque entrée de flux reproductible indiquant un identificateur de paquet (PID) d'un flux de données qui est reproductible au cours de la présentation de l'élément à reproduire ou du sous-élément à reproduire.

8. Procédé selon la revendication 7, dans lequel le tableau de flux inclut en outre des informations d'attributs de flux pour chaque flux principal et supplémentaire de données.

9. Appareil de reproduction de flux de données à partir d'un support d'enregistrement, l'appareil comprenant :
une unité de saisie configurée pour reproduire des données enregistrées sur le support d'enregistrement ; et
une unité de commande configurée pour commander à l'unité de saisie de :
lire une liste de contenus enregistrée sur le support d'enregistrement, la liste de contenus incluant un élément à reproduire pour gérer un flux principal de données et
un sous-élément à reproduire pour gérer un flux supplémentaire de données,
l'élément à reproduire incluant des informations d'heures de début et de fin de présentation dans le flux principal de données, le sous-élément à reproduire incluant des informations d'heures de début et de fin de présentation dans le flux supplémentaire de données, les informations d'heures de début et de fin de l'élément à reproduire et du sous-élément à reproduire indiquant des horodatages de présentation,
lire, du support d'enregistrement, une première information de clip incluant une première information de carte mappant les horodatages de présentation sur des numéros de paquet du flux principal de données et une seconde information de clip incluant une seconde information de carte mappant les horodatages de présentation sur des numéros de paquet du flux supplémentaire de données, et
reproduire le flux principal de données et le flux supplémentaire de données, chaque flux de données incluant des paquets de données, chaque paquet de données ayant les numéros de paquet et un identifiant de paquet (PID),
l'appareil étant **caractérisé en ce que** l'unité de commande est configurée pour commander à l'unité de saisie de lire un tableau de flux de la liste de contenus, le tableau de flux incluant des entrées de flux reproductibles pour le flux principal de données et pour le flux supplémentaire de données, chaque entrée de flux reproductible indiquant un identificateur de paquet (PID) d'un flux de données qui est reproductible au cours de la présentation de l'élément à reproduire ou du sous-élément à reproduire.

10. Appareil selon la revendication 9, dans lequel l'unité de commande est configurée pour lire des informations d'attributs de flux pour chaque flux principal et supplémentaire de données du tableau de flux.

11. Appareil d'enregistrement de flux de données sur un support d'enregistrement, l'appareil comprenant :
une unité de saisie configurée pour enregistrer des données sur le support d'enregistrement ; et
une unité de commande, couplée de manière opérationnelle à l'unité de saisie, configurée pour commander à l'unité de saisie de :
enregistrer un flux principal de données et un flux supplémentaire de données sur le support d'enregistrement, chaque flux de données incluant des paquets de données,
chaque paquet de données ayant un numéro de paquet et un identificateur de paquet (PID),
enregistrer, sur le support d'enregistrement, une première information de clip incluant une première information de carte mappant des horodatages de présentation sur les numéros de paquet du flux principal de données et une seconde information de clip incluant une seconde information de carte mappant des horodatages de présentation sur les numéros de paquet du flux supplémentaire de données,
enregistrer une liste de contenus sur le support d'enregistrement, la liste de contenus incluant un élément à reproduire pour gérer le flux principal de données et un sous-élément à reproduire pour gérer le flux supplémentaire de données, l'élément à reproduire incluant des informations d'heures de début et de fin de présentation dans le flux principal de données, le sous-élément à reproduire incluant des informations d'heures de début et de fin de présentation dans le flux supplémentaire de données,
les informations d'heures de début et de fin de l'élément à reproduire et du sous-élément à reproduire indiquant les horodatages de présentation respectivement dans les première et seconde informations de clip,
l'appareil étant **caractérisé en ce que** la liste de contenus inclut en outre un tableau de flux incluant des entrées de flux reproductibles pour le flux principal de données et
pour le flux supplémentaire de données, chaque entrée de flux reproductible indiquant un identificateur de paquet (PID) d'un flux de données au cours de la présentation de l'élément à reproduire ou du sous-élément à reproduire.

12. Appareil selon la revendication 11, dans lequel le tableau de flux inclut en outre des informations d'attributs de flux pour chaque flux principal et supplémentaire de données.
